# EUROPEAN PATENT APPLICATION

(11) **EP 3 076 539 A1**
(43) Date of publication of application: **05.10.2016**
(21) Application number: 15162294.1
(22) Date of filing: 01.04.2015
(51) Int. Cl.: H02M 7/487, H02M 7/5395

(54) **Discontinuous PWM with overmodulation and neutral point balancing for 3-level converters**

(71) Applicant: Siemens Aktiengesellschaft, 80333 München (DE)
(72) Inventor: Carter, Robert, Knutsford, WA16 8XU (GB)
(74) Representative: Maier, Daniel Oliver

(57) **Abstract**

According to the invention, a method for controlling a three-level inverter is presented which uses a pulse width modulation scheme is provided, wherein a first of three output phases of the inverter is connected to the midpoint of a DC link of the inverter over a whole time sample of the pulse width modulation scheme, and when the first output phase is not connected to the midpoint of the DC link, either a second of the three output phases is connected to the high potential level or a third of the three output phases is connected to the low potential level of the DC link over a whole time sample of the pulse width modulation scheme.

## Description

The present invention relates to methods for controlling a three-level inverter using a pulse width modulation scheme and a corresponding three-level inverter.

In power electronics applications, pulse width modulation (PWM) inverters play a key role due to their ability of producing AC voltages of variable magnitude as well as variable frequency. PWM inverters thus are very commonly used for example for motor drive loads with a need for adjustable speed where the motor load is supplied with either variable voltage or variable frequency.

A PWM inverter may have a single phase or three phase output, and apart from a wide range of different inverter topologies, there are several PWM techniques with different methods of implementation. One common goal of most inverter topologies and all PWM schemes is to generate an output voltage with, possibly after some filtering step, sinusoidal voltage waveform of a desired frequency and magnitude. In many inverters, this goal is approached by dividing a sine waveform into small samples, assigning each sample a duty cycle value corresponding to for example the wave form's mean over the sample, and connecting the output circuit of the inverter to a fixed DC voltage supply, typically given by a capacitance, in either positive or negative direction of an inverter bridge according to the given duty cycle in each sample. Typically, the time of a sample is chosen as a PWM pulse period or as a half pulse period. A "symmetrical" modulation may be discretised into half pulse periods.

For a given operating frequency, deviations from a sinusoidal wave form are present as higher harmonic Fourier components, resulting in distortion. While many of the loads, for example motor wirings, have a significant inductance and therefore an inherent quality to suppress high frequency harmonic currents, the problem of harmonic distortion causing compatibility and power loss remains for lower harmonics.

As one solution to generate smoother wave forms, three-level topologies have been introduced. Their main advantage compared to the technically simpler two-level systems is that the sine wave does not need to be resemble the duty cycles of one single voltage step in each of its phase legs. In a three-level topology, two voltage steps, typically at two capacitances in series which are assumed to be identical, are at hand to mimic the sine wave form through switching. The overall DC link voltage step is thereby never applied entirely at a load but only half of the full voltage range at each duty cycle is used. This results in a far better harmonic performance, thus compensating for the higher complexity and the intrinsically more elaborate switching control.

It is known, for example from the earlier European patent application no. 13199294.3, to connect one of the three output phases of a three-level inverter to one of the potential levels of the DC link during an entire sampling time of the PWM scheme in order to reduce switching losses which typically cause heat dissipation. According to this earlier patent application, in order to establish an electric reference potential to deal with output voltage asymmetry caused by differences in the voltages at the inverters DC link capacitances, one of the output phase legs of the inverter is connected to one of the two DC link voltage levels or alternatively to the midpoint of the DC link.

It is a first objective of the present invention to suggest a method for controlling a three-level inverter which reduces switching losses further. It is a second objective of the present invention to suggest a method which allows controlling the DC link midpoint voltage of a of three-level inverter. These objectives are addressed by the features of the independent claims. Preferred embodiments of the inventive methods are disclosed in corresponding dependent claims.

According to a first aspect of the present invention, a method for controlling a three-level inverter using a pulse width modulation scheme is provided, wherein a first of three output phases of the inverter is connected to the midpoint of a DC link of the inverter over a whole time sample of the pulse width modulation scheme, and when the first output phase is not connected to the midpoint of the DC link, either a second of the three output phases is connected to the high potential level or a third of the three output phases is connected to the low potential level of the DC link over a whole time sample of the pulse width modulation scheme.

Preferably, connection to the respective potential level of the DC link over the whole time sample of the pulse width modulation scheme is realised by stopping switching of the respective output phase.

Preferably, the first output phase is the output phase with, over the whole time sample of the pulse width modulation scheme, a voltage level between the voltage levels of the second and third output phases.

Preferably, when the voltage level of the second output phase exceeds the high potential level of the DC link, a voltage corresponding to the excess voltage of the second output phase is subtracted from the voltage levels of the first and third output phases, while when the voltage level of the third output phase exceeds the low potential level of the DC link, a voltage corresponding to the excess voltage of the third output phase is added to the voltage levels of the first and second output phases.

According to a second aspect of the invention, a method for controlling a three-level inverter using a pulse width modulation scheme is provided, wherein a first of three output phases of the inverter is connected to the midpoint of a DC link of the inverter over a whole time sample of the pulse width modulation scheme, and wherein for controlling the voltage level of the midpoint of the DC link, the first output phase is connected to the midpoint of the DC link only during either times of rising transition or times of falling transition of the voltage level of the first output phase.

Preferably, when the first output phase is not connected to the midpoint of the DC link, either a second of the three output phases is connected to the high potential level or a third of the three output phases is connected to the low potential level of the DC link over a whole time sample of the pulse width modulation scheme.

Preferably, when the voltage level of the second output phase exceeds the high potential level of the DC link, a voltage corresponding to the excess voltage of the second output phase is subtracted from the voltage levels of the first and third output phases, while when the voltage level of the third output phase exceeds the low potential level of the DC link, a voltage corresponding to the excess voltage of the third output phase is added to the voltage levels of the first and second output phases.

Preferably, the first output phase is the output phase with the highest or lowest voltage level of the three output phases.

Furthermore, the methods according to the first and second aspect of the invention can be realised in a three-level inverter configured as a Vienna rectifiers.

Alternatively, the methods according to the first and second aspect of the inventions can be realised in a three-level inverter with a T-type topology or in a soft-switching three-level inverter.

According to a third aspect of the invention, a three-level inverter employing a pulse width modulation scheme is provided, wherein the inverter comprises at least an input circuit and a DC link in parallel to the input circuit, wherein the DC link comprises at least two capacitances in series establishing three electric potential levels, an output circuit comprising three multi-level output phase legs connected in parallel to the DC link, each one of which comprising a plurality of switches, a number of diodes and a connection to the midpoint between two of the DC link capacitances, and connectable to a load such that the load by switching is connected during operation to either of the three DC link potential levels, and wherein the inverter further comprises a control unit for realising the method according to first and second aspects of the invention.

Preferably, the number of the DC link capacitances is two, and each of the three output phase legs is comprised of a diode clamped three-level phase leg comprising of four switches in series, a flyback diode in anti-parallel to each one of the switches, and a diode bridge of at least two diodes in series bridging the inner two switches, wherein the connection point of each output phase leg to the midpoint of the two DC link capacitances is located between two diodes of the diode bridge, and the link to an output phase is located at the midpoint of the four switches.

Preferably, the input circuit of the inverter comprises a three phase AC mains connection and a rectifier bridge with three rectifier phase legs in parallel, each one of which having at its midpoint the connection to one AC mains phase leg.

Exemplary embodiments of the invention as well as related advantages will now be described with reference to the following figures, where
FIG 1 shows a diode clamped 3-level inverter with three output phase legs and a control unit,
FIG 2 shows the modulation of three output phases at relatively low modulation depth,
FIG 3 shows the modulation of three output phases at intermediate modulation depth,
FIG 4 shows the modulation of three output phases at maximum modulation depth,
FIG 5 shows the modulation of three output phases at relatively low modulation depth with a DC link balancing control,
FIG 6 shows the modulation of three output phases at intermediate modulation depth with a DC link balancing control,
FIG 7 shows a diagram of the Imid current as a function of power factor cos(phi) of the load,
FIG 8 shows an oscilloscope trace of the modulation of an output phase at intermediate modulation depth with a DC link balancing control, and
FIG 9 shows a typical Vienna rectifier.

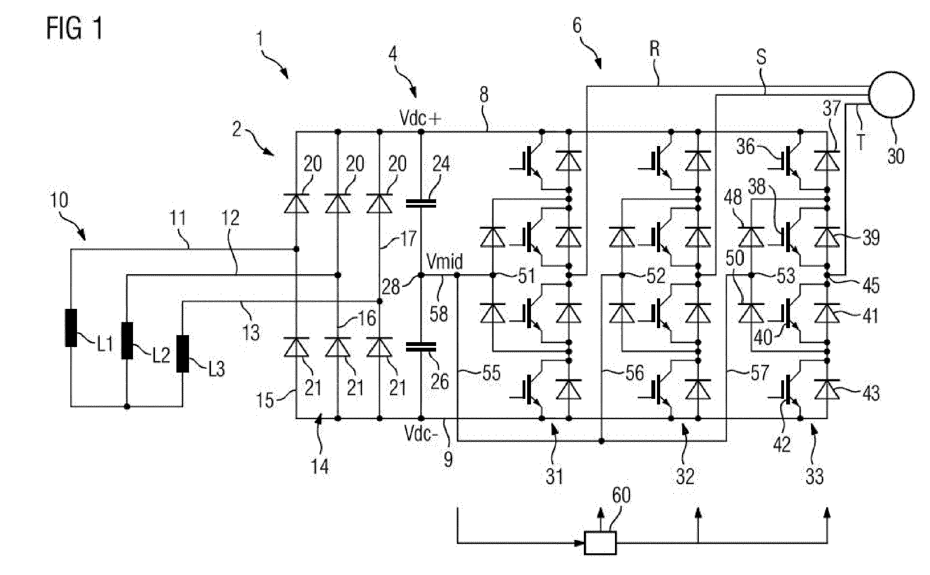

FIG 1 shows an exemplary inverter circuit 1 as also disclosed in the earlier European patent application no. 13199294.3 mentioned above. The inverter comprises an input circuit 2, a DC link 4 and an output circuit 6, all of which are connected in parallel through wires 8 and 9.

The input circuit 2 is connected to an AC mains power supply 10 via three connections 11, 12, 13, where each one of the connections is connected to one of the three phase legs L1, L2, L3 of the AC power supply 10. The input circuit 2 further comprises a rectifier bridge 14 with three rectifier phase legs 15, 16, 17 in parallel. Each one of the connections 11, 12, 13 is connected to o9ne op the parallel rectifier phase legs 15, 16, 17 of the rectifier bridge 14. Each rectifier phase leg 15, 16, 17 shows two diodes 20, 21 in series such that the connection point of each of the connections 11, 12, 13 to the corresponding rectifier phase leg 15, 16, 17 lies between the two diodes 20, 21.

The DC link 4 features two capacitances 24, 26. Thus, at the DC link, there are three electrical potential levels, given by Vdc+ at wire 8, Vmid at the midpoint 28 of capacitances 24 and 26 and Vdc- at wire 9.

The output circuit 6 is connected to a three phase load 30 via three phase legs 31, 32, 33, which in turn are in parallel to the DC link 4 and the rectifier bridge 14 of the input circuit 2 via wires 8 and 9. The phase legs 31, 32, 33 are equal in their respective topology, so only phase leg 33 is described in detail. It comprises four semiconductor switches 36, 38, 40, 42, to each one of which is clamped a flyback diode 37, 39, 41, 43 in anti-parallel. The midpoint 45 between the four switches 36, 38, 40, 42 is connected to the load 30. The two inner switches 38, 40 are bridged by two diodes 48, 50 in series, while the midpoints 51, 52, 53 of the diode bridges of the three phase legs 31, 32, 33 are connected together through wires 55, 56, 57 and to the midpoint 28 of the DC link 4 via link 58.

The output phase leg 31 is connected to a phase R of load 30, the output phase leg 32 is connected to a phase S of load 30, and the output phase leg 33 is connected to a phase T of load 30.

If the two "upper" switches 36 and 38 are closed while the two "lower" switches 40 and 42 remain open, the connection to the load 30 via the phase leg's 33 midpoint 45 to the DC link 4 goes over wire 8 and thus is set to the potential Vdc+.

If the two "inner" switches 38 and 40 are closed while the two "outer" switches 36 and 42 remain open, the connection to the load 30 via the phase leg's 33 midpoint 45 to the DC link 4 goes over the midpoint 53 of the diodes 48, 50, over wire 57 and the link 58 to the midpoint 28 of the DC link. Thus a connection to the load 30 is set to the potential Vmid.

If now the two "upper" switches 36 and 38 remain open while the two "lower" switches 40 and 42 are closed, the connection to the load 30 to the DC link 4 goes over wire 9 and thus is set to the potential Vdc-.

The inverter further comprises a control unit 60 set up to realise the methods according to the invention by sending control signals to all switches 36, 38, 40, 42 (and unlabelled ones) of the output circuit 6.

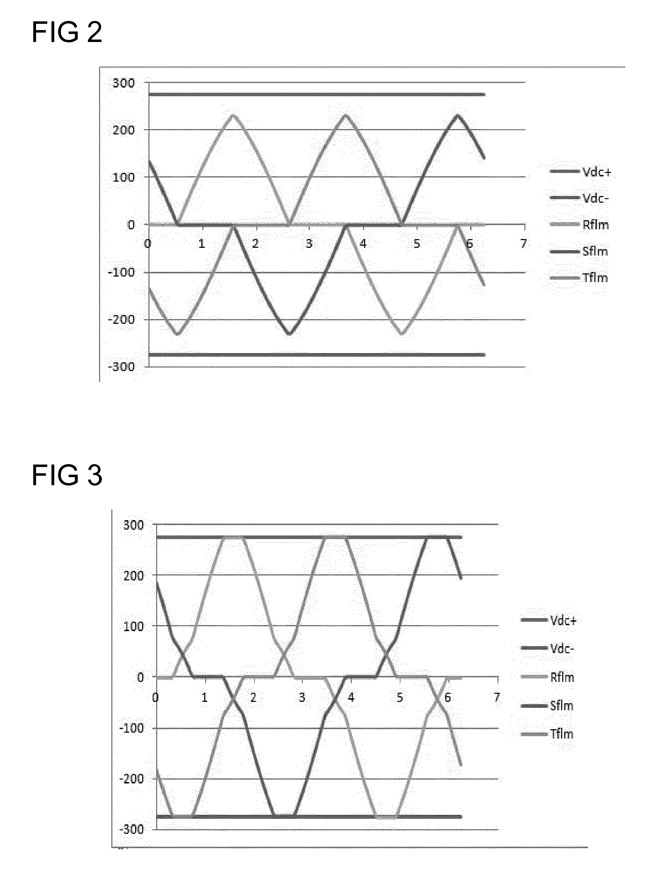

The diagrams in FIG 2 to FIG 6 show exemplary waveforms of the three output phases R, S and T of the three-level inverter disclosed in FIG 1. Furthermore, in all these figures, exemplary positive and negative DC link voltages Vdc+, Vdc- of +275V and -275V are indicated as references. The DC link midpoint voltage Vmid is at 0V and also serves as reference for all other absolute voltages.

FIG 2, FIG 3 and FIG 4 are now used to describe a transition from a modulation where, at low modulation depth, always one of the three output phases R, S, T of the inverter is continuously, that is for a number of time samples of the PWM scheme, connected to Vmid, to a modulation where, at 100% modulation depth, always one of the output phases is connected to either Vdc+ or Vdc-, via a modulation where, at intermediate modulation depth, for specific times, one of the output phases is connected either to Vmid, Vdc+ or Vdc-.

FIG 2 shows the modulation of the three output phases at relatively low modulation depth, generating a relatively low output voltage with an exemplary 190Vrms line-line waveform. In the example of FIG 2, none of the three output phases is connected to the high Vdc+ and low potential levels Vdc- of the DC link. Instead, always one of the three output phases is connected to the midpoint voltage Vmid of the DC link. This connection of one of the three output phases to Vmid for 120 electrical degrees helps to reduce switching losses and general component voltage stresses.

According to the invention, this is achieved by inspecting the sinusoidal output voltages of the three phases that should be created, and by instantaneously constraining the middle one of the three output phases to be the one at the midpoint voltage Vmid of the DC link. During that time interval, the two other output phases will have negative and positive voltages, respectively, and generally an identical voltage difference relative to Vmid. In the example of FIG 2, the output phase Tflm is connected to Vmid between time instances ca. 1.6 and 2.6 as well as between time instances ca. 4.7 and 5.7, so together for one third of a complete cycle of output phase Tflm. During these time intervals in which this output phase is connected to Vmid, the voltage level of the phase is between those of the two other output phases Rflm and Sflm.

FIG 3 shows the modulation of the three output phases at an intermediate modulation depth, generating in this example a 260Vrms line-line waveform. When a higher output voltage is required by the load, for example a motor, the peaks of the waveforms of the output phases would exceed the high and low potential levels of the DC link. By subtracting the excess voltage from all three output phases, the output changes such that individual phases now stop switching, with for certain time intervals being continuously connected to Vmid while for other time intervals being continuously connected to Vdc+ and Vdc- of the DC link. It is to be noted that, as in the example of FIG 2, at any instant one of the three output phases is connected to one of the voltages Vmid, Vdc+ and Vdc- of the DC link and therefore stops switching.

In FIG 3, it can be seen that output phase Tflm is connected again to Vmid as in FIG 2, but in this case for a shorter time interval between time instances ca. 1.8 and 2.4 and between time instances ca. 4.9 and 5.5. In the reduced time intervals compared to the example of FIG 2, one of the other two output phases Rflm, Sflm is connected to either Vdc+ or Vdc-. In the time interval between time instances ca. 1.6 and 1.8 for example, output phase Rflm is connected to Vdc+, while in the time interval between time instances ca. 4.7 and 4.9, output phase Rflm is connected to Vdc- of the DC link. Similarily, output phase Tflm is connected to Vdc- and Vdc+ of the DC link for specific intervals of the output cycle.

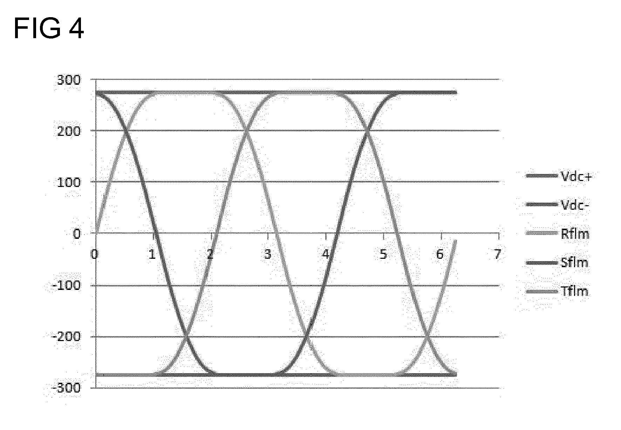

FIG 4 shows the modulation of the three output phases at a maximum, that is a 100% modulation depth, generating a maximum output voltage with an exemplary 387Vrms line-line waveform with a nearly perfect sine wave. In this situation, the output phases can no longer be continuously connected to Vmid. However, it can be seen that only two of the three output phases are switching, resulting in switching losses being reduced by one third.

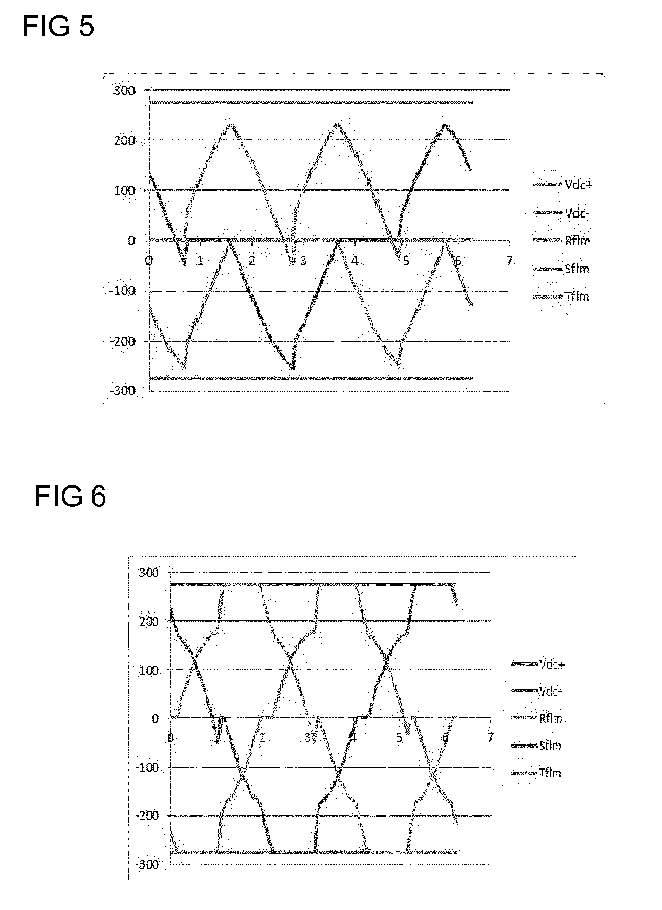

The inventive control of the midpoint voltage Vmid of the DC link is now described with reference to FIG 5 to 8.

Control of the midpoint voltage of the DC link may for example be achieved by adding a common mode voltage to the waveforms of all three output phases. This approach is generally effective and practical for an inverter for mains regeneration because the load current is controlled to be in phase with the voltage. However, the use of a common mode voltage is generally not practical when trying to reduce switching losses by stopping switching and connecting output phases for as much time as possible to either the midpoint, the high or the low potential level of the DC link. This is because any addition of a voltage to a non-switching output phase would start the switching again. Also, in the case of a motor drive, the power factor cos(phi) can typically vary between +0.9 and -0.5 depending on the motor load. When the load current phase angle is near 90 degrees, the midpoint voltage control using a common mode voltage becomes ineffective because its inherent gain tends towards zero and can change sign. A motor may operate continuously in this condition.

At low modulation depths, always one of the three output phases is connected to Vmid to reduce switching losses and general component voltage stresses. In turn, connection to Vmid must be made for 120 electrical degrees if there is always one output phase not switching. According to the invention, control of Vmid is effected by moving the time at which an output phase becomes the non-switching output phase away from the instant at which it becomes the one of the three output voltages with the middle voltage level.

This may for example be achieved with a voltage comparison function. However, it should be constrained in that the time is only changed on the rising transition, if a positive current into the midpoint of the DC link Imid is required, or on the falling transition if a negative current Imid is required. In a practical system, this requires knowledge at the modulator of the direction of rotation of the inverter output voltage phasor.

Fig 5 shows a DC link balancing control based on the example of FIG 2, with a relatively low modulation depth resulting in a relatively low output voltage, none of the three output phases reaching the high and low potential levels of the DC link, and a 190V line-line waveform with 50V Imid comparator value.

In the example of FIG 5, different to the example of FIG 2, it is not always the output phase with a voltage level between the two other output phases that is connected to Vmid for a time period equivalent to 120 electrical degrees, a full cycle of the output phase corresponding to 360 electrical degrees. As mentioned above, in the example of FIG 2, the output phase Tflm is connected to Vmid between time instances ca. 1.6 and 2.6 as well as between time instances ca. 4.7 and 5.7, so together for one third of a complete cycle of output phase Tflm. During these time intervals in which this output phase is connected to Vmid, the voltage level of the phase is between those of the two other output phases Rflm and Sflm. In FIG 5, it can be seen that output phase Tflm is connected to Vmid in the time interval between time instances ca. 1.6 and 2.6, during which it represents the middle voltage between the two other output phases Rflm and Sflm. However, output phase Tflm continues to be connected to Vmid for an additional time interval between time instances ca. 2.6 and 2.8. In this additional time interval, Tflm is not the output phase with the voltage level between the two other output phases but the output phase with the highest voltage level, the middle voltage level being that of output phase Rflm which, according to FIG 2, would be connected to Vmid during this time interval. So, different to the example of FIG 2, during the interval between time instances ca. 2.6 and 2.8, it is not the output phase with the middle voltage level of the three output phases which is connected to Vmid but output phase Tflm with the highest voltage level.

In the same way, output phase Tflm is not connected to Vmid for the time interval between time instances ca. 5.5 and 5.7, as in the example of FIG 2, but instead output phase Sflm, having the highest voltage level of the three output phases, is connected to Vmid during this time interval.

In the example of FIG 5, connection of the output phase with the highest voltage level is only done on the rising transition in the output cycle, that is only when the output phase transitions from being connected to Vmid to higher voltage levels. This results in a positive midpoint current Imid at the DC link. Similarly, a negative midpoint current Imid may be generated by connecting the output phase with the lowest voltage level only on the falling transition, that is when this output phase transitions from being connected to Vmid to lower voltage levels. The asymmetrical timing adjustment of the connection of one output phase to Vmid avoids possible Vmid control issues when the power factor cos(phi) of the load is zero, while at the same time maintaining an error free output voltage.

A symmetrical component of the timing adjustment may be used to minimize overall switching losses by arranging for every output phase to stop switching at or near its phase current peak.

Based on the example of FIG 5, FIG 6 shows a DC link balancing control for a situation when a high output voltage is required. Similar to the example of FIG 4, in an output cycle, the output phases are connected at different times to Vmid as well as to Vdc- and Vdc+. Overall, at all times one of the three output phases is connected to one of the DC link voltages Vmid, Vdc- and Vdc+.

FIG 6 shows the example of a 320Vrms line-line waveform with 230V Imid comparator value. As can be seen from the waveform of the three output phases, the control has the desired effect only once the voltage level of the individual output phase exceeds about 190V.

Furthermore, FIG 6 shows that for example output phase Tflm is connected to Vmid only between time instances ca. 2 and 2.3, wheren during this time interval, Tflm is the output phase with a voltage level between those of the other two output phases Rflm and Sflm. Subsequently, output phase Tflm is connected to Vmid between time instances ca. 5.2 and 5.3, while between time instance ca. 5.1 and 5.2 connection of output phase Rflm to Vdc- is extended. The longer connection of output phase Tflm to Vmid between time instances ca. 2 and 2.3 compared to the subsequent shorter connection to Vmid between the time instances between ca. 5.2 and 5.3 is done on the rising transition in the output cycle of this output phase. In general, the relatively short time intervals during which the output phase Tflm is connected to Vmid are due to the high modulation depth.

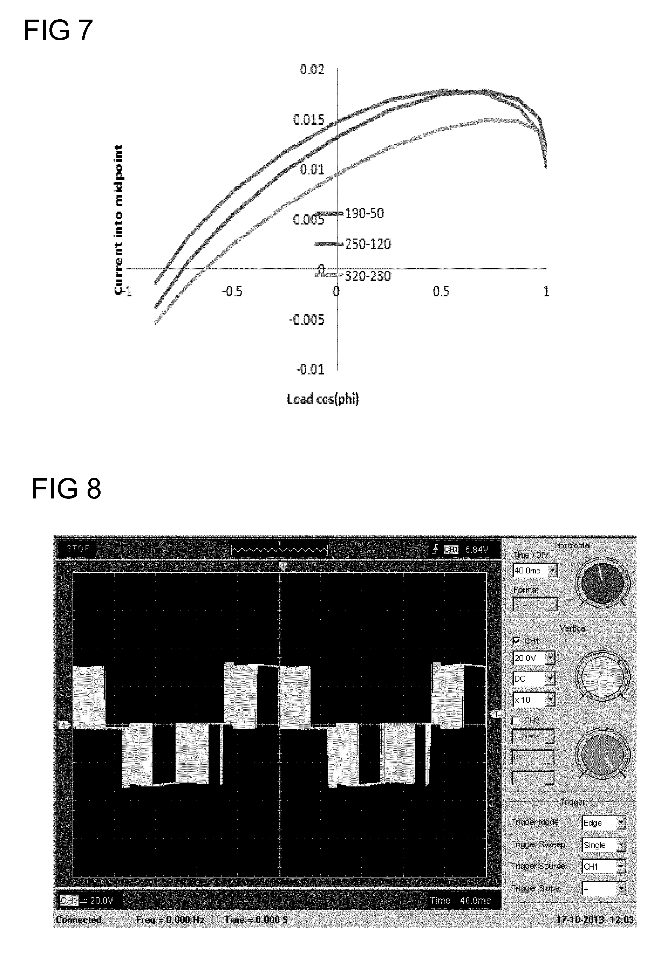

As mentioned above, the asymmetrical timing adjustment of the connection of one output phase to Vmid employed in the examples of FIGs 5 and 6 avoids possible Vmid control issues when the power factor cos(phi) of the load is zero, while at the same time maintaining an error free output voltage. Even at higher modulation depth, the Vmid control produces a midpoint current Imid with a predicable sign and a reasonable magnitude even when the power factor cos(phi) of the load is zero. This can be seen from the graphs in FIG 7 which show how the balancing current Imid into the midpoint of the DC link is affected by the power factor cos(phi) of the load, for example a motor, for various line to line output voltages. It is to be noted that the sign of the balancing current remains positive up to a high negative power factor, thereby allowing for reliable balancing control. The indicated exemplary voltage levels, 190-50 and 320-230 correspond to the examples of FIGs 5 and 6, with the first value indicating the line to line voltage and the second value the controlling comparator voltage.

FIG 8 shows an exemplary oscilloscope trace of an output phase. As can be seen from the graph, for certain time intervals of a full cycle, switching of the phase between either Vmid and Vdc+ or Vmid and Vdc- is stopped and the phase is connected to one of the three voltages of the DC link. Also, the asymmetrical timing adjustment can be seen in the graph, wherein the output phase is connected to Vmid for a longer time interval when transitioning in the cycle from the positive voltage to the negative voltage of the DC link compared to the time interval it is connected to Vmid when transitioning from the negative voltage to the positive voltage of the DC link. In the latter transition, additional switching between the Vmid and Vdc- occurs during which a different output phase is connected to Vmid, effecting the Vmid control.

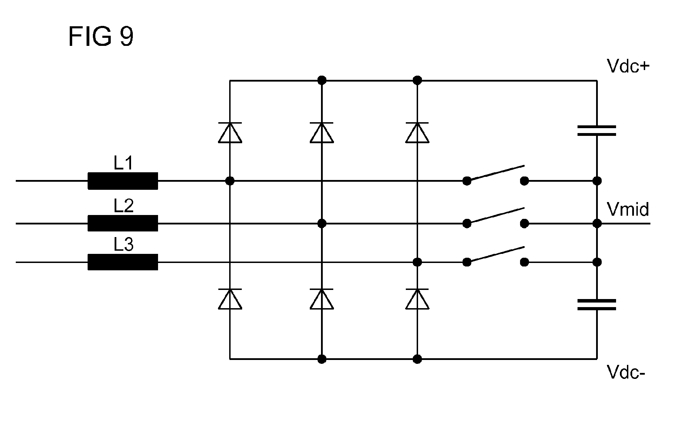

Fig 9 shows an exemplary Vienna rectifier circuit, with the input connected to one of the three phase legs L1, L2 and L3 of an AC power supply similar to the inverter circuit in FIG 1, and a DC link with output potential levels Vdc+, Vdc- and Vmid. The above described method of continuously connecting one of the output phases to the midpoint Vmid of the DC link can similarly be realised in such a Vienna rectifier, wherein the direction of the current is uncertain. The is realised by operating the indicated switches between the three phase legs L1, L2, L3 and the midpoint output voltage Vmid.

In a Vienna rectifier, only the midpoint switches are controlled, and any time a midpoint switch is 'off' that phase will switch to Vdc+ or Vdc-, depending on the current direction because of the diodes. This modulation mode has a continuous connection to the DC link midpoint in the time zone when the current direction is changing, preventing output voltage uncertainties and consequent control issues.

Similarly, the invention may be implemented in a three-level inverter with a T-type topology or a soft-switching three-level inverter known in the art.

## Claims

1. Method for controlling a three-level inverter (1) using a pulse width modulation scheme, wherein
- a first of three output phases (R,S,T) of the inverter is connected to the midpoint (Vmid) of a DC link of the inverter over a whole time sample of the pulse width modulation scheme, and
- when the first output phase is not connected to the midpoint of the DC link, either a second of the three output phases is connected to the high potential level (Vdc+) or a third of the three output phases (R,S,T) is connected to the low potential level (Vdc-) of the DC link over a whole time sample of the pulse width modulation scheme.

2. Method according to claim 1, wherein
connection to the respective potential level of the DC link over the whole time sample of the pulse width modulation scheme is realised by stopping switching of the respective output phase.

3. Method according to claim 1 or 2, wherein
the first output phase is the output phase with a voltage level between the voltage levels of the second and third output phases.

4. Method according to any of claims 1 to 3, wherein
when the voltage level of the second output phase exceeds the high potential level of the DC link, a voltage corresponding to the excess voltage of the second output phase is subtracted from the voltage levels of the first and third output phases, and
when the voltage level of the third output phase exceeds the low potential level of the DC link, a voltage corresponding to the excess voltage of the third output phase is added to the voltage levels of the first and second output phases.

5. Method for controlling a three-level inverter (1) using a pulse width modulation scheme, wherein
- a first of three output phases (R,S,T) of the inverter is connected to the midpoint (Vmid) of a DC link of the inverter over a whole time sample of the pulse width modulation scheme, and
- for controlling the voltage level of the midpoint of the DC link, the first output phase is connected to the midpoint of the DC link only during either times of rising transition or times of falling transition of the voltage level of the first output phase.

6. Method according to claim 5, wherein
when the first output phase is not connected to the midpoint of the DC link, either a second of the three output phases is connected to the high potential level (Vdc+) or a third of the three output phases (R,S,T) is connected to the low potential level (Vdc-) of the DC link over a whole time sample of the pulse width modulation scheme.

7. Method according to claim 6, wherein
when the voltage level of the second output phase exceeds the high potential level of the DC link, a voltage corresponding to the excess voltage of the second output phase is subtracted from the voltage levels of the first and third output phases, and
when the voltage level of the third output phase exceeds the low potential level of the DC link, a voltage corresponding to the excess voltage of the third output phase is added to the voltage levels of the first and second output phases.

8. Method according to claim 5, wherein
the first output phase is the output phase with the highest or lowest voltage level of the three output phases.

9. Method according to any of claims 1 to 8, wherein
the three-level inverter is a Vienna rectifier.

10. Method according to any of claims 1 to 8, wherein
the three-level inverter is a three-level inverter with a T-type topology or a soft-switching three-level inverter.

11. A three-level inverter (1) employing a pulse width modulation scheme, comprising at least:
- an input circuit (2),
- a DC link (4) in parallel to the input circuit (2) comprising at least two capacitances (24, 26) in series establishing three electric potential levels (Vdc+, Vmid, Vdc-),
- an output circuit (6) comprising three multi-level output phase legs (31, 32, 33) connected in parallel to the DC link (4), each one of which comprising a plurality of switches (36, 38, 40, 42), a number of diodes (37, 39, 41, 43, 48, 50) and a connection (55, 56, 57, 58) to the midpoint (28) between two of the DC link capacitances (24, 26), and connectable to a load (30) such that the load (30) by switching is connected during operation to either of the three DC link potential levels (Vdc+, Vmid, Vcd-), and a control unit (60) for realising the method according to claims 1 or 5.

12. A three-level inverter according to claim 11, wherein the number of the DC link capacitances (24, 26) is two, and each of the three output phase legs (31, 32, 33) is comprised of a diode clamped three-level phase leg comprising of four switches (36, 38, 40, 42) in series, a flyback diode (37, 39, 41, 43) in anti-parallel to each one of the switches (36, 38, 40, 42), and a diode bridge of at least two diodes (48, 50) in series bridging the inner two switches (38, 40), wherein the connection point (51, 52, 53) of each output phase leg (31, 32, 33) to the midpoint (28) of the two DC link capacitances (24, 26) is located between two diodes (48, 50) of the diode bridge, and the link to an output phase (R, S, T) is located at the midpoint (45) of the four switches (36, 38, 40, 42).

13. A three-level inverter according to claim 11 or 12, wherein
the input circuit (2) comprises a three phase AC mains connection (11, 12, 13) and a rectifier bridge (14) with three rectifier phase legs (15, 16, 17) in parallel, each one of which having at its midpoint the connection (11, 12, 13) to one AC mains phase leg (L1, L2, L3).
